# EUROPÄISCHE PATENTSCHRIFT

(11) **EP 2 216 235 B1**
(45) Veröffentlichungstag und Bekanntmachung des Hinweises auf die Patenterteilung: **28.09.2011**
(21) Anmeldenummer: 09001546.2
(22) Anmeldetag: 04.02.2009
(51) Int. Cl.: B62D 7/14

(54) **Freilaufschaltung einer hydraulischen Hilfskraftlenkung**
Decoupling circuit of a hydraulic power steering
Découplage d'une direction auxiliaire hydraulique

(43) Veröffentlichungstag der Anmeldung: 11.08.2010
(73) Patentinhaber: HAWE Hydraulik SE, 81673 München (DE)
(72) Erfinder: Heusser, Martin, 81245 München (DE); Stönner, Christoph, 80639 München (DE); Macit, Recept, 81673 München (DE)
(74) Vertreter: Grünecker, Kinkeldey, Stockmair & Schwanhäusser Anwaltssozietät

(56) Entgegenhaltungen:
- DE-A1- 19 819 404
- DE-A1-102007 033 804

## Beschreibung

Die vorliegende Erfindung betrifft eine hydraulische Freilaufschaltung für eine lenkbare Hinterachse.

### STAND DER TECHNIK

Hydraulisch unterstützte Lenkungen sind aus dem Stand der Technik hinreichend bekannt. Eine hydraulische Lenkkraftverstärkung, sogenannte Servolenkungen, wird z. B. in der DE 10 2007 033 804 A1 beschrieben.

In 3-achsigen Nutzfahrzeugen mit einer doppelten Hinterachse wird oft eine der beiden Hinterachsen lenkbar ausgeführt, um Fahrstabilität, Manövrierfähigkeit zu verbessern und Reifenabrieb zu minimieren. Ist die erste Hinterachse die Lenkachse, so lenkt diese gleichsinnig zur Vorderachse. Die zweite Hinterachse wird dagegen oft gegensinnig zur Vorderachse gelenkt. Die Lenkkraftübertragung erfolgt bei dieser Art von Hinterradlenkung in der Regel hydraulisch. Eine allgemeine Anforderung an solche Lenkarten ist, dass bei einer Störung der Richtungssteuerung die Hilfskraftlenkung freigeschaltet werden muss, so dass die lenkbare Hinterachse selbsttätig mitgeht (passiv lenkt).

Eine Lenkvorrichtung der Räder einer als Nach- oder Vorlaufachse ausgebildeten Lenkachse eines wenigstens drei Achsen aufweisenden Kraftfahrzeuges mit einer Hydraulikanordnung wird in der DE 198 19 404 A1 gezeigt.

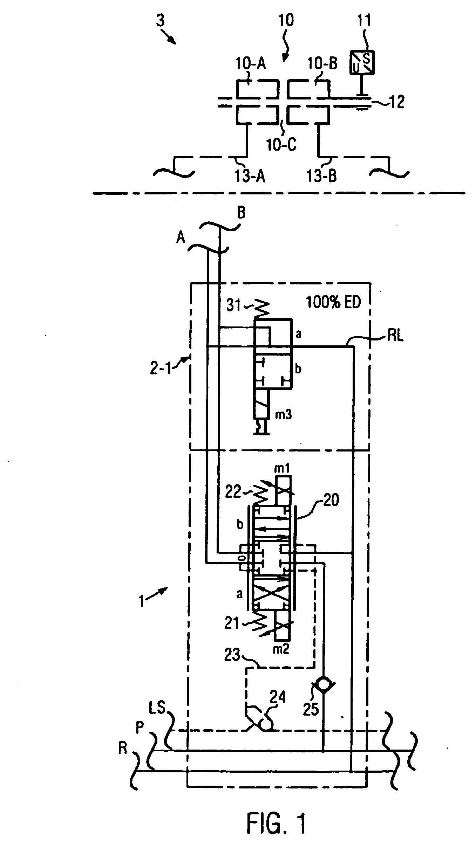

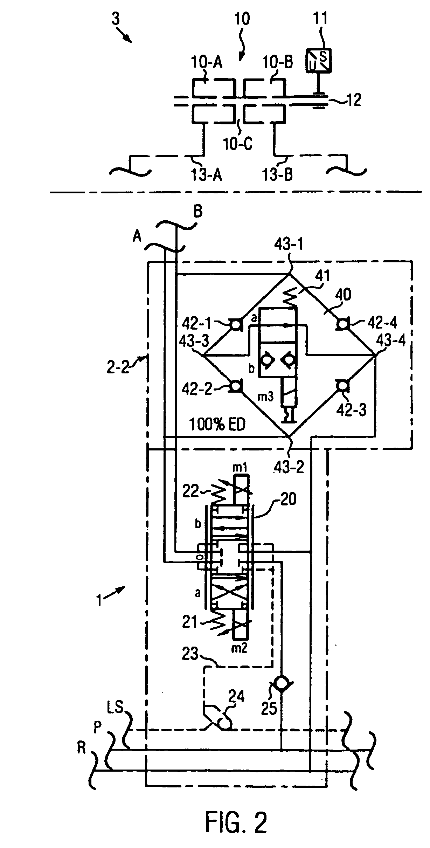

Gemäß einem firmeninternen Stand der Technik der Anmelderin werden Steuerungen für solche Hilfskraftlenkungen mit 4/3 Wegeschieberventilen mit Proportionalmagneten realisiert, wobei dem Schieberventil zum Verbraucher entweder ein 3/2 Wege-Schaltventil mit Schwarz/Weiß-Magneten (Figur 1), oder eine Brückenschaltung mit einem 2/2-Wegeschaltventil in Sitzventilbauweise in der Brückendiagonalen (Figur 2) nachgeschaltet ist. Im Folgenden wird dieser Stand der Technik anhand der Figuren 1 und 2 näher erläutert.

Figur 1 zeigt eine hydraulische Lenksteuervorrichtung einer Hilfskraftlenkung für Nutzfahrzeuge mit drei oder mehr Achsen, die die Lenkkraftübertragung auf eine lenkbare Hinterachse steuern kann. Figur 1 zeigt drei Baugruppen des Lenksys tems für die Hilfskraftlenkung für Nutzfahrzeuge. Das Bezugszeichen 1 bezeichnet die hydraulische Lenksteuerung, die die Zufuhr des hydraulischen Fluidmaterials und damit die Kraftzufuhr steuert. Das Bezugszeichen 2-1 bezeichnet die Freilaufschaltung und das Bezugszeichen 3 bezeichnet die Einrichtung zur Lenkkrafterzeugung.

In der Einrichtung 3 zur Lenkkrafterzeugung in Figur 1 bezeichnet das Bezugszeichen 10 einen hydraulischen Aktuator, der das für die Lenkung erforderliche Bewegungsmoment erzeugt. Insbesondere wird in Figur 1 ein doppelt wirkender Zylinder 10 schematisch dargestellt. Ein Kolben 10-C teilt den Innenraum des doppelt wirkenden Zylinders 10 in eine erste Arbeitskammer 10-A und eine zweite Arbeitskammer 10-B auf, die über Anschlussleitungen 13-A und 13-B mit einem hydraulischen System bestehend aus einer hydraulischen Lenksteuerung 1 und Versorgungseinheiten wie Pumpen, Drucksteuerungen, Reservoir etc. (nicht gezeigt) verbunden sind. Eine Kolbenbewegung im doppelt wirkenden Zylinder 10 wird auf eine Kolbenstange 12 übertragen, deren Lageposition durch einen Sensor 11 erfasst wird.

Obwohl in den Fig. 1 und 2 ein doppelt wirkender Zylinder mit gleich großen Beaufschlagungsflächen gezeigt wird, sind auch andere hydraulische Aktuatoren verwendbar. Zum Beispiel können auch doppelt wirkende Zylinder mit ungleichen Beaufschlagungsflächen bei gleichzeitiger geschwindigkeitsabhängiger Druckregelung für die beiden Bewegungsrichtungen, gegensinnig angeordnete Differentialzylinder oder hydraulische Motoren, wie zum Beispiel Orbitmotor, Rollflügelmotor oder Sperrflügelmotor, verwendet werden. Gemeinsam ist allen Aktuatoren, dass für jede Lenkrichtung ein Druckraum vorhanden ist, die zueinander komplementär sind. D.h. wenn sich in einem Druckraum der Druck erhöht, erniedrigt sich der Druck in dem anderen, komplementären Druckraum. Das von dem hydraulischen Aktuator erzeugte Bewegungsmoment wird dann zum Beispiel über ein Lenkritzel auf eine Lenkmechanik an den Rädern des Fahrzeugs üertragen.

In der ersten Baugruppe, die die hydraulische Lenksteuerung 1 umfasst, bezeichnet in Figur 1 das Bezugszeichen 20 ein 4/3-Wegeschieberventil, das auf einer Eingangsseite mit einer Druckleitung P und einer Rücklaufleitung R verbunden ist. Auf einer Ausgangsseite ist das 4/3-Wegeschieberventil 20 mit einer ersten Arbeitsleitung A und einer zweiten Arbeitsleitung B verbunden. Die Arbeitsleitungen A und B werden jeweils mit den Anschlussleitungen 13-A und 13-B des hydraulischen Aktuators 10 verbunden. Das 4/3-Wegeschieberventil 20 wird im Ruhezustand durch Federn 21 und 22 in einer Mittelstellung 0 gehalten, in der alle Anschlüsse gesperrt sind. Durch Magnete m1 und m2 wird der Schieber des 4/3-Wegeschieberventils in die Arbeitsstellung a bzw. b bewegt. Die Darstellung in Figur 1 zeigt ein proportionales 413-Wegeschieberventil, was durch die Linien auf beiden Seiten des Ventilsymbols in Figur 1 angedeutet ist, d. h. der Volumenstrom lässt sich durch die E-lektromagnete m1 und m2 steuern.

In Ruhestellung 0 sind alle Anschlüsse im Ventil blockiert und der Kolben 10-C bzw. die damit verbundene Kolbenstange 12 des hydraulischen Aktuators 10 hält seine Position.

Wird die Spule m1 des 4/3-Wegeschieberventils 20 bestromt, schiebt sich der Schiebekolben des 4/3-Wegeschieberventils 20 in Richtung Stellung b. Da es sich um ein Proportionalventil handelt, lässt sich der Volumenstrom mit der Stromstärke einstellen und der Schieber des 4/3-Wegeschieberventils 20 verschiebt sich abhängig von der Stromstärke in Stellung b. Das heißt, der maximal mögliche Volumenstrom wird bei maximaler Auslenkung des Schieberkolbens des 4/3-Wegeschieberventils 20 erreicht. In der Stellung b ist die Druckleitung P mit der Arbeitleitung B verbunden und die Arbeitleitung A ist mit der Rückleitung R verbunden. In der Stellung b fließt hydraulische Flüssigkeit von der Pumpe (nicht gezeigt) über die Arbeitsleitung B und den Anschluss 13-B in die zweite Arbeitskammer 10-B des doppelt wirkenden Zylinders 10. Gleichzeitig wird aus der ersten Arbeitskammer 10-A des doppelt wirkenden Zylinders 10 Hydraulikflüssigkeit über den Anschluss 13-A und die Arbeitsleitung A in die Rücklaufleitung R und damit zurück ins Reservoir (nicht gezeigt) geschoben. Die Kolbenstange 12 bewegt sich in der in Figur 1 gezeigten Darstellung nach links.

Wird die Stromzufuhr zur Spule m1 unterbrochen, schiebt sich der Schieber des 4/3-Wegeschieberventils 20 aufgrund der Federspannung der Federn 21 und 22 zurück in die Nullstellung 0, und der Zulauf und der Ablauf für die Hydraulikflüssigkeit für den doppelt wirkenden Zylinder 10 wird unterbrochen. Wird die Spule m2 bestromt, schiebt sich der Schieber des 4/3-Wegeschieberventils 20 in die Stellung a. In diesem Fall ist die Arbeitsleitung A mit der Druckleitung P verbunden und hydraulische Flüssigkeit wird von der Pumpe (nicht gezeigt) über die Druckleitung P, die Arbeitsleitung A und den Anschluss 13-A in die erste Druckkammer 10-A des doppelt wirkenden Zylinders 10 gedrückt. Gleichzeitig wird in der Stellung a die Arbeitsleitung B mit der Rücklaufleitung R verbunden, so dass hydraulische Flüssigkeit aus der zweiten Druckkammer 10-B des doppelt wirkenden Zylinders 10 über den Anschluss 13-B, die Arbeitsleitung B und die Rücklaufleitung R in das Reservoir zurückströmen kann. In der Stellung a bewegt sich also die Kolbenstange 12 in der in Figur 1 gezeigten Darstellung nach rechts.

Weiterhin zeigt das 4/3-Wegeschieberventil 20 der Figur 1 einen integrierten Lastdruckabgriff für ein lastdruckgeregeltes Gesamtsystem. Der Lastdruckabgriff wird in handelsüblichen Wegeventilen durch Kanalstrukturen im Gehäuse der Wegeventile realisiert. Im 4/3-Wegeventil 20 der Figur 1 ist in der Stellung 0 die Lastdruckleitung LS mit der Rückleitung R über den ventilinternen Lastdruckabgriff 23 und das Wechselventil 24 verbunden. In den Stellungen a und b ist die Lastdruckleitung LS über den ventilinternen Lastdruckabgriff 23 und dem Wechselventil 24 mit der jeweils unter Druck stehenden Arbeitsleitung A bzw. B verbunden. Dadurch wird ein Steuersignal bereitgestellt, bei dem eine Pumpe (nicht gezeigt) abgeschaltet werden kann, wenn sich das 4/3-Wegeschieberventil 20 in Ruhestellung 0 befindet.

Eine weitere Baugruppe in der Figur 1 zeigt eine Freilaufschaltung 2-1. Die Freilaufschaltung 2-1 wird durch ein 3/2-Wegeschieberventil 30 realisiert. Das 3/2-Wegeschieberventil 30 ist auf der Eingangsseite jeweils mit den Arbeitsleitungen A und B verbunden. Auf der Ausgangsseite ist das 3/2-Wegeschieberventil 30 über die Verbindungsleitung RL mit der Rücklaufleitung R verbunden. Eine Feder 31 hält das Ventil im Ruhezustand in der Stellung a. Bei Betätigung des 3/2-Wegeschieberventils 30, zum Beispiel durch Bestromung des Magneten m3 oder durch Handbetätigung, bewegt sich der Schieber des 3/2-Wegeschieberventils 30 in die Stellung b. In der Stellung b sind alle Anschlüsse gesperrt. In der Stellung a sind die Arbeitsleitungen A und B mit der Rücklaufleitung R verbunden.

Im Normalbetrieb wird die Spule des Magneten m3 bestromt und das 3/2-Wegeschieberventil 30 befindet sich in Stellung b. Das heißt, die Arbeitsleitungen A und B sind voneinander getrennt und nicht mit der Rücklaufleitung R verbunden. Die Lenkbewegung wird über das 4/3-Wegeschieberventit 20 aktiv gesteuert. Im Störungsfall wird der Strom zum Magneten m3 abgeschaltet, und das 3/2-Wegeschieberventil 30 schaltet in Stellung a aufgrund der Federkraft der Feder 31. In dieser Stellung sind die Arbeitsleitungen A und B und die Rücklaufleitung R miteinander kurzgeschlossen. Das heißt, hydraulische Flüssigkeit kann ungehindert aus den Arbeitskammern 10-A und 10-B des doppelt wirkenden Zylinders 10 zu- und abfließen. Dadurch können die gelenkten Räder an der Hinterachse passiv mitlenken. Wenn zum Beispiel aufgrund einer Richtungsänderung des Nutzfahrzeuges auf die Kolbenstange 12 über die Räder eine Kraft von rechts nach links in der in Figur 1 gezeigten Darstellung auftritt, erhöht sich der Druck in der Arbeitskammer 10-A und der Druck in der Arbeitskammer 10-B erniedrigt sich. Aus der Arbeitskammer 10-A kann hydraulische Flüssigkeit ungehindert über den Anschluss 13-A und die Arbeitsleitung A abfließen. Umgekehrt kann aufgrund des Unterdruckes in der Arbeitskammer 10-B hydraulische Flüssigkeit über den Anschluss 13-B aus der Arbeitsleitung B nachströmen. Da die Arbeitsleitungen A und B über das 3/2-Wegeventil 30 kurzgeschlossen sind, fließt einfach hydraulische Flüssigkeit von der Arbeitskammer 10-A über die Arbeitsleitung A durch das 3/2-Wegeschieberventil 30 zur Arbeitsleitung B in die Arbeitskammer 10-B.

Im Fall von unterschiedlichen druckwirksamen Flächen auf beiden Seiten des Kolbens im Inneren des doppelt wirkenden Zylinders 10 entstehen unterschiedliche Volumenänderungen pro Zeiteinheit in den Arbeitskammern 10-A und 10-B. Durch die Verbindung des dritten Anschlusses des 3/2-Wegeschieberventils 30 mit der Rücklaufleitung R kann deshalb überschüssige hydraulische Flüssigkeit bei der Bewegung des Kolbens in die Rücklaufleitung R abgegeben werden oder aus ihr nachgesaugt werden.

Figur 2 zeigt eine Variante der Freilaufschaltung 2-1 der Figur 1. Die restlichen Elemente der Figur 2 stimmen mit den Elementen der Figur 1 überein und werden deshalb nicht mehr beschrieben. Die Figur 2 zeigt eine Freilaufschaltung 2-2 in Form einer Brückenschaltung. Bei der Brückenschaltung werden zwei Reihenschaltungen mit jeweils zwei Rückschlagventilen parallel geschaltet. Die erste Reihenschaltung, bestehend aus den Rückschlagventilen 42-1 und 42-4, wird mit der zweiten Reihenschaltung, bestehend aus den Rückschlagventilen 42-2 und 42-3, an den Knotenpunkten 43-3 und 43-4 parallel geschaltet. Die Rückschlagventile sind so geschaltet, dass sie von dem Knoten 43-3 in Richtung Knoten 43-4 durchlässig sind. Die Knoten 43-3 und 43-4 sind außerdem durch ein 2/2-Wegeventil 40 miteinander verbunden (Brückeschaltung). Der Knoten 43-4 ist mit der Rücklaufleitung verbunden. In der ersten Reihenschaltung sind die zwei Rückschlagventile 42-1 und 42-4 an dem Knoten 43-1 miteinander verbunden, wobei der Knoten 43-1 an der Arbeitsleitung B angeschlossen ist. In der zweiten Reihenschaltung sind die Rückschlagventilen 42-2 und 42-3 an dem Knoten 43-2 miteinander verbunden, wobei der Knoten 43-2 an der Arbeitsleitung A angeschlossen ist. Eine Feder 41 hält im Ruhezustand das 2/2-Wegeventil 40 in der Stellung a. Bei Handbetätigung oder bei Bestromung des Magneten m3 wird das 2/2-Wegeventil 40 in die Stellung b geschaltet. In der Stellung a verbindet das 2/2-Wegeventil 40 die Knotenpunkte 43-3 und 43-4. In Stellung b ist der Durchgang gesperrt. In der Figur 2 ist das 2/2-Wegeventil als Sitzventil ausgeführt, das heißt, das Ventil ist leckagefrei.

Im aktiven Lenkbetrieb ist die Spule des Magneten m3 bestromt. Das heißt, das 2/2-Wegeventil 40 befindet sich im Zustand b. Das heißt, es gibt keine Fluidverbindung zwischen den Arbeitsleitungen A und B über die Brückenschaltung. Im Fall einer Störung, zum Beispiel bei Stromausfall, schiebt die Feder 41 das 2/2-Wegesitzventil 40 in den Zustand a und hydraulische Flüssigkeit kann von der Arbeitsleitung A über das Rückschlagventil 42-2, das 2/2-Wegesitzventil 40 und das Rückschlagventil 42-4 zur Arbeitsleitung B strömen. Umgekehrt kann hydraulische Flüssigkeit von der Arbeitsleitung B über das Rückschlagventil 42-1, das 2/2-Wegesitzventil 40 und das Rückschlagventil 42-3 in die Arbeitsleitung A fließen. Damit kann hydraulische Flüssigkeit ungehindert zwischen den Arbeitskammern 10-A und 10-B hin- und herfließen. Das heißt, das Lenksystem lenkt passiv mit, wie bereits in Zusammenhang mit Figur 1 ausführlich beschrieben wurde.

Eine wichtige Anforderung an diese Systeme ist eine möglichst kleine Druckdifferenz über das 3/2- bzw. 2/2-Wegeventil, so dass im Zustand der passiven Lenkfähigkeit Lenkvorgänge möglichst ohne Zeitverzögerung ausgeführt werden. Das bedeutet, dass die 3/2- oder 2/2-Wegeventile unter Umständen nicht nur die gesamte Pumpenfördermenge, sondern auch das Druckmittel aus dem Zylinder ableiten können müssen. Eine Konsequenz daraus ist, dass die 3/2- oder 2/2-Schaltventile 30 oder 40 groß und schwer ausfallen müssen, damit sie die gesamte Menge Druckmittel mit geringem Druckunterschied abströmen lassen. Groß und schwer bedeutet viel Bauraum und hohe Kosten. Groß und schwer bedeutet aber auch, dass ein großer und leistungshungriger Schwarz/Weiß-Schaltmagnet notwendig ist, um die notwendigen Schaltkräfte aufzubringen. Da zur Sicherheit die Freilaufschaltung 2-1 bzw. 2-2 im Ruhezustand der 3/2- oder 2/2-Wegeventile aktiv sein soll, um bei Stromausfall die Lenkfähigkeit zu erhalten, ist der Magnet m3 des 3/2- oder 2/2-Wegeventils im Normalbetrieb (aktive Lenkung) bestromt. Wenn dieses Ventil bei Normalbetrieb bestromt und gesperrt ist, heizt sich der starke Schaltmagnet auf. Daneben ist auch der Energieverbrauch durch die ständige Bestromung des großen Magneten entsprechend hoch. Die Freilaufschaltung ist an der Hinterachse relativ ungeschützt montiert und ist harten Umweltbedingungen, wie starke Temperaturschwankungen, Spritzwasser, Schmutz, Salz, unmittelbar ausgesetzt. Durch die starke Aufheizung des Magnet ist keine wirksame und kostengünstige Abschirmung aufgrund des dann entstehenden Wärmestaus möglich. Aufgrund der Aufheizung und des Dauerbetriebs des großen Schaltmagneten mit gelegentlichen Abschreck-Duschen neigt dieser leicht zum Durchbrennen, was bedeutet, dass dann kein Normalbetrieb mehr möglich ist, weil die Verbindung zum Rücklauf stets offen bleibt. Auf der anderen Seite ist die Freilaufschaltung als Sicherheitseinrichtung zwingend notwendig, da der Schieber des Hauptventils 20 gegebenenfalls hängen bleiben kann und dann keine gesteuerte Lenkung mehr möglich ist. Dieses Hängenbleiben wird über die übergeordnete elektronische Steuerung festgestellt, um dann das Schaltventil 30 oder 40 auf Durchgang zu stellen. Zur Sicherheit weist das Ventil 30 oder 40 eine Notbetätigung von Hand auf. Wenn der Schieber hängenbleibt, kann ferner eine Schaltstellung vorliegen, in der der Schieber die von der Pumpe geförderte Menge durchlässt, die dann auch über das Schaltventil zum Rücklauf abgelassen werden muss. Der Stand der Technik ist also baulich aufwändig und relativ teuer und energieineffizient, wegen der großen und leistungsfähigen Schaltmagneten.

Es ist deshalb eine Aufgabe der vorliegenden Erfindung, eine solche hydraulische Freilaufschaltung für eine Hilfskraftlenkungssteuerung für die Sicherheitsfunktion mit einfacheren hydraulischen Komponenten und vor allem energieeffizient zu gestalten und durch die Sicherheitsfunktion störungs- bzw. ausfallsicherer zu machen.

### ZUSAMMENFASSUNG DER ERFINDUNG

Die Aufgabe wird gelöst durch eine hydraulische Freilaufschaltung für eine hydraulische Hilfskraftlenkung gemäß Anspruch 1.

Die Lösung besteht darin, für die Freilaufsicherheitsfunktion zwei hydraulisch betätigbare Rückschlagventile zwischen dem Rücklauf und den beiden Arbeitsleitungen zu platzieren, und zu deren Vorsteuerung ein kleinbauendes leichtes 2/2-Wege-Sitzventil mit Schwarz/Weiß-Magnet und Handbetätigung vorzusehen. Die große Arbeitsölmenge fließt über das jeweilige entsperrte Rückschlagventil mit geringem Differentialdruck ab. Da das 2/2-Wegesitzventil oder -Schaltventil nur eine Vorsteuerfunktion erbringt, kann es sehr klein gebaut sein, da es nur die Steuerölmenge verkraften muss. Dadurch kann auch der Schwarz/Weiß-Magnet sehr klein und schwach sein, so dass er sich bei einer Dauerleistung von 3 Watt bis 8 Watt betreiben lässt. Dies bedeutet umgekehrt im Dauerbetrieb eine kaum nennenswerte Aufheizung und lässt es deshalb zu, speziell den Schaltmagneten oder die ganze Sicherheitsfunktion wirkungsvoll abzuschirmen, so dass die Dauerstandfestigkeit besser wird. Ein Aufheizen des Ventils durch den Dauerbetrieb und aufgrund einer geschlossenen Bauweise tritt deshalb nicht auf.

In einer Ausführungsform gemäß Anspruch 2 sind Steuereingänge des ersten und zweiten hydraulisch betätigbaren Rückschlagventils über das mindestens eine 2/2-Wegesitzventil mit der Rücklaufleitung verbunden. Dadurch kann auf einfache Weise der Steuereingang der ersten und zweiten hydraulisch betätigbaren Rückschlagventile druckentlastet werden, so dass sich die lenkbare Hinterachse in einem Freilaufzustand befindet.

In einer Ausführungsform gemäß Anspruch 3 sind die Steuereingänge des ersten und zweiten hydraulisch betätigbaren Rückschlagventils mit jeweils einem Eingang eines Wechselventils verbunden, und ein Ausgang des Wechselventils ist mit dem 2/2-Wegesitzventil verbunden. Durch das Wechselventil vereinfacht sich die Ventilanordnung, da andernfalls ein 4/2-Wegeventil zur Verbindung der Steuereingänge mit der Rücklaufleitung notwendig wären. Dadurch wird die Ventilanordnung sowohl kostengünstiger als auch zuverlässiger.

In einer Ausführungsform nach Anspruch 4 ist das erste und das zweite hydraulisch betätigbare Rückschlagventil so ausgebildet, dass es bei drucklosem Steuereingang in beide Richtungen offen ist, und dass es bei druckbeaufschlagtem Steuereingang in Richtung Rücklaufleitung sperrt. Dadurch werden sogenannte Schaltpatronen einsetzbar, die aus dem Standardventilsortiment der Anmelderin entnehmbar sind. Weiterhin wird die Sicherheit erhöht, da die Ventile im Ruhezustand immer offen sind, so dass die Freilauffunktion immer gewährleistet ist.

In einer weiteren Ausführungsform gemäß Anspruch 5 ist das 2/2-Wegesitzventil so geschaltet, dass die Freilaufschaltung aktiv ist, wenn sich das 2/2-Wegesitzventil im Ruhezustand befindet. Das heißt, wenn die Ventilfeder des 2/2-Wegestitzventils das 2/2-Wegesitzventil in den Ruhezustand versetzt, ist das erste und das zweite Rückschlagventil aktiviert, so dass die Hinterachse passiv mitlenkt. Dadurch wird sichergestellt, dass bei einer Fehlfunktion des hydraulischen Systems, wie zum Beispiel bei einem Stromausfall, die Hinterachslenkung automatisch in den Zustand des passiven Lenkens übergeht. Dadurch wird die Sicherheit des Lenksystems erhöht.

Gemäß einer weiteren Ausführungsform gemäß Anspruch 6 ist der Steuereingang des ersten hydraulisch betätigbaren Rückschlagventils über eine Blende mit dem Arbeitsdruck der ersten Arbeitsleitung beaufschlagt und der Steuereingang des zweiten hydraulisch betätigbaren Rückschlagventils ist über eine Blende mit dem Arbeitsdruck der zweiten Arbeitsleitung beaufschlagt. Durch die Verbindung des Steuereingangs des vorher genannten Rückschlagventils bzw. der Schaltpatrone ist sichergestellt, dass im Normalfall die Rückschlagventile gesperrt sind, so dass die Hinterachslenkung aktiv gelenkt wird. Bei Aktivierung der Freilaufschaltung, das heißt, wenn das 2/2-Wegesitzventil im Ruhezustand ist, stellt sich automatisch am Steuereingang ein Druck ein, so dass das Rückschlagventil in beiden Richtungen offen ist.

In einer weiteren Ausführungsform nach Anspruch 7 ist das 2/2-Wegesitzventil ein elektrisch betätigbares 2/2-Wegesitzventil mit zusätzlicher Handbetätigung. Dadurch lässt sich die Freilaufschaltung in einem elektrohydraulischen System betreiben und auch per Hand betätigen falls alle elektrischen Sicherheitsmechanismen versagen sollten.

In einer weiteren Ausführungsform nach Anspruch 8 ist das elektrisch betätigbare 2/2-Wegesitzventil im Ruhezustand geöffnet und im bestromten Zustand geschlossen. In dieser Ausführungsform wird bei Verwendung eines Rückschlagventils nach Art des Anspruches 4 sichergestellt, dass im Ruhezustand, das heißt im Störungsfall, die Freilaufschaltung aktiviert ist und damit die Hinterachse passiv mitlenkt. Auf der anderen Seite werden die Rückschlagventile des Anspruches 4 gesperrt, wenn das 2/2-Wegesitzventil bestromt wird, und die Hilfskraftlenkung ist aktiv.

In einer weiteren Ausführungsform nach Anspruch 9 ist parallel zu dem elektrisch betätigbaren 2/2-Wegesitzventil ein Druckbegrenzungsventil angeschlossen, das das elektrisch betätigbare 2/2-Wegesitzventil umgeht, wenn der Druck an dem Steuereingang des Druckbegrenzungventils einen vorbestimmten Wert überschreitet. Dadurch erhält die hydraulische Freilaufschaltung eine Schock- und Nachsaugfunktion, die das Lenksystem davor schützt, dass sich der Druck im System über dessen Belastungsgrenze erhöht, zum Beispiel durch Schockeinwirkung, und die auch dafür sorgt, dass die passive Lenkfähigkeit erhalten bleibt.

### KURZE BESCHREIBUNG DER FIGUREN

Im Folgenden werden anhand der Zeichnungen Ausführungsformen des Erfindungsgegenstandes im Vergleich zum Stand der Technik erläutert. Es zeigen:
- Figur 1: ein Blockschaltbild einer hydraulischen Lenksteuervorrichtung mit einer Freilaufschaltung für eine Hilfskraftlenkung gemäß dem Stand der Tech- nik;
- Figur 2: ein Blockschaltbild einer hydraulischen Lenksteuervorrichtung mit einer alternativen Ausführung einer hydraulischen Freilaufschaltung für eine Hilfskraftlenkung gemäß dem Stand der Technik;
- Figur 3a: eine erste Ausführungsform einer hydraulischen Freilaufschaltung für ei- ne Hilfskraftlenkung gemäß der vorliegenden Erfindung;
- Figur 3b: ein Detailschema für das Rückschlagventil aus der Figur 3a;
- Figur 3c: eine Querschnittsansicht für die Realisierung des Rückschlagventils aus den Figuren 3a und 3b;
- Figur 4: ein Blockschaltbild einer zweiten Ausführungsform der hydraulischen Freilaufschaltung für eine Hilfskraftlenkung gemäß der vorliegenden Er- findung; und
- Figur 5: ein Blockschaltbild einer dritten Ausführungsform einer hydraulischen Freilaufschaltung für eine Hilfskraftlenkung gemäß der vorliegenden Er- findung, die eine Schock- und Nachsaugfunktion aufweist.

### AUSFÜHRLICHE BESCHREIBUNG VON AUSFÜHRUNGSFORMEN

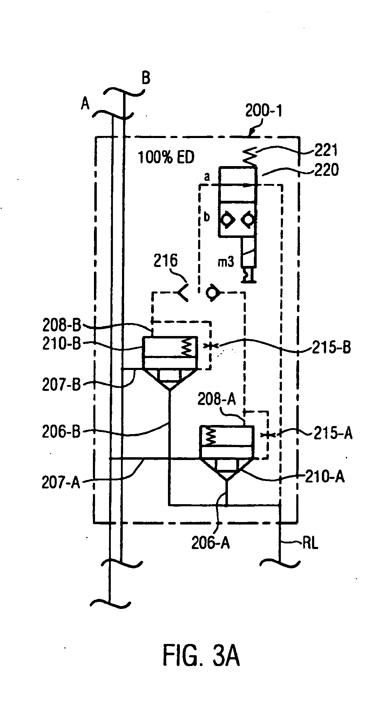

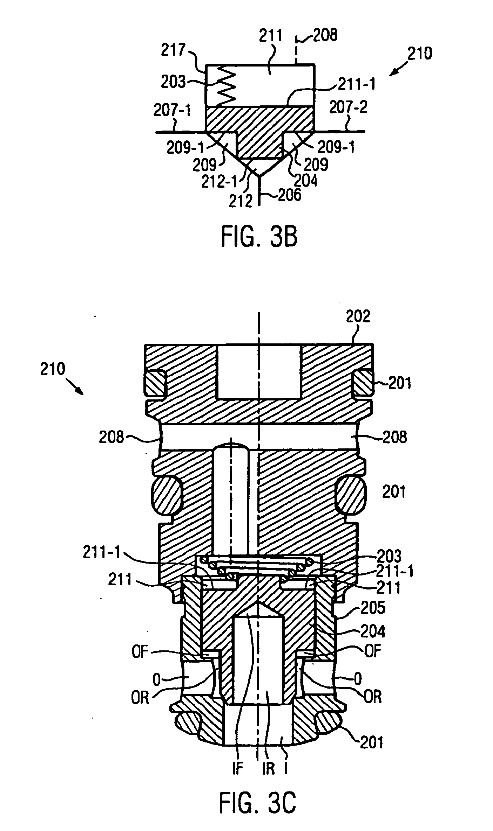

Die Figuren 3a, 3b und 3c zeigen eine erste Ausführungsform einer hydraulischen Freilaufschaltung für eine Hilfskraftlenkung insbesondere für eine Hinterachse von dreiachsigen Nutzfahrzeugen mit einer doppelten Hinterachse, bei denen zusätzlich zur Vorderachse eine der beiden Hinterachsen mitlenkt. Figur 3a zeigt das Gesamtschema der hydraulischen Freilaufschaltung 200-1 gemäß der vorliegenden Erfindung als Blockschaltbild. Figur 3b zeigt schematisch ein mögliches Rückschlagventil, das in der Figur 3a verwendet wird, und Figur 3c zeigt eine Querschnittszeichnung einer Realisierung eines solchen Rückschlagventils.

Die in Figur 3a gezeigte erste Ausführungsform der vorliegenden Erfindung zeigt mit den Bezugszeichen 210-A und 210-B zwei hydraulisch betätigbare Rückschlagventile, die über hydraulische Steuereingänge 208-A und 208-B steuerbar sind. Das Bezugszeichen 220 zeigt ein 2/2-Wegesitzventil mit den Stellungen a und b. In Stellung a ist das 2/2-Wegesitzventil auf Durchgang geschaltet und in Stellung b sind die beiden Fluidanschlüsse des 2/2-Wegesitzventils 220 gesperrt. Eine Feder 221 zwingt das 2/2-Wegesitzventil 220 im Ruhezustand in die Stellung a. Bei Bestromung der Spule des Elektromagneten m3 des 2/2-Wegesitzventils 220 schaltet das Ventil gegen die Federkraft der Feder 221 in den Schaltzustand b. Alternativ kann das Ventil als Sicherheitseinrichtung auch per Hand betätigt werden. Das Ventil ist für Dauerbestromung ausgelegt, das heißt, im Betrieb befindet sich das Ventil 220 in der Regel im Zustand b, was in der Figur 3a durch die Kennzeichnung "100 % ED" (Einsatzdauer) angezeigt ist. Die Ausgangsleitungen 206-A und 206-B der Rückschlagventile 210-A und 210-B sind mit der Rückleitung RL verbunden. Der Eingangsanschluss 207-A des Rückschlagventils 210-A ist in Figur 3a mit der Arbeitsleitung A verbunden. Der Eingangsanschluss 207-B des Rückschlagventils 207-B ist mit der Arbeitsleitung B verbunden. Weiterhin werden die Steuereingänge zu 208-A und 208-B über Blenden 215-A bzw. 215-B mit dem Druck der Eingangsleitungen 207-A bzw. 207-B beaufschlagt. Weiterhin sind die Steuereingänge 208-A bzw. 208-B mit jeweils einem Eingang eines Wechselventils 216 verbunden. Der Ausgang des Wechselventils 216 ist mit einem Eingangsanschluss des 2/2-Wegesitzventils 220 verbunden. Der Ausgang des 2/2-Wegesitzventils 220 ist mit der Rückleitung RL verbunden.

Im Normalbetrieb, das heißt die aktive Lenkung ist aktiv, ist die Spule des Magneten m3 bestromt und das 2/2-Wegesitzventil 220 ist im gesperrten Zustand b. Bei aktiven Lenkvorgängen ist entweder die Arbeitsleitung A oder die Arbeitsleitung B je nach Lenkrichtung unter Druck. Entsprechend dem Hauptsteuerventil 20 oder 30 aus den Figuren 1 oder 2 sind drei verschiedene Zustande für die Arbeitsleitungen A und B möglich. In Stellung b des Hauptsteuerventils 20 oder 30 steht die Arbeitsleitung A unter Druck und die Arbeitsleitung B ist mit dem Rücklauf verbunden. In der Stellung a des Hauptsteuerventils 20 oder 30 ist die Arbeitsleitung B mit der Druckleitung P verbunden und die Arbeitsleitung A ist mit der Rückleitung R verbunden. In der Stellung 0 des Hauptsteuerventils 20 oder 30 stehen beide Arbeitsleitungen A und B unter Druck. In jeder der Stellungen ist mindestens eine der Arbeitsleitungen A und B unter Druck, so dass zumindest eines der Rückschlagventile 210-A und 210-B gesperrt ist. Das heißt, wenn das 2/2-Wegesitzventil 220 in Stellung b ist, kann keine hydraulische Flüssigkeit von der Arbeitsleitung A über die Rückschlagventile 210-A und 210-B in die Arbeitsleitung B strömen, und umgekehrt. Die Freilaufschaltung ist deshalb deaktiviert.

Ist auf der anderen Seite das 2/2-Wegesitzventil 220 im Ruhezustand, das heißt in Stellung a, wird der entsprechende unter Druck stehende Steuereingang 208-A oder 208-B über das 2/2-Wegesitzventil 220 in die Rücklaufleitung RL druckentlastet und das entsprechende Rückschlagventil 210-A bzw. 210-B ist in beide Richtungen geöffnet. Steht beispielsweise die Arbeitsleitung A unter Druck, wird der Druck über die Eingangsleitung 207-A und das Rückschlagventil 210-A und über die Blende 215-A auf den Steuereingang 208-A übertragen. Da das 2/2-Wegesitzventil 220 auf Durchgang steht (Stellung a) wird der Druck am Steuereingang 208-A über das Wechselventil 216 in die Rückleitung RL abgeleitet und das 2/2-Wegesitzventil 210-A öffnet sich, so dass hydraulische Flüssigkeit über die Ausgangsleitung 206-A des Rückschlagventiles 210-A von der unter Druck stehenden Arbeitsleitung A abströmen kann. Umgekehrt entsteht, verursacht durch die Richtungsänderung des Fahrzeuges, ein Unterdruck in der Arbeitsleitung B, so dass die hydraulische Flüssigkeit aus der unter Druck stehenden Arbeitsleitung A über die 2/2-Wegesitzventite 210-A und 210-B in die Arbeitsleitung B und in den hydraulischen Verbraucher strömt.

Bei einer Lenkung in die entgegengesetzte Richtung wird die Arbeitsleitung B unter Druck gesetzt und es entsteht ein Unterdruck in der Arbeitsleitung A. In diesem Fall wird der Druck in der Arbeitsleitung B über die Blende 215-B an den Steuereingang 208-B des 2/2-Wegesitzventils 210-B weitergeleitet. Das Wechselventil 216 schaltet den Druck an dem Steuereingang 208-B auf den Eingang des 2/2-Wegesitzventils 220 durch. Da das 2/2-Wegesitzventil 220 in Stellung a ist, wird der Druck am Steuereingang 208-B in die Rückleitung RL abgeleitet. Das heißt, das Rückschlagventil 210-B ist in beiden Richtungen offen und hydraulische Flüssigkeit kann aus der unter Druck stehenden Arbeitsleitung B über die Rückschlagventile 210-B und 210-A in die Arbeitsleitung A und damit in die komplementäre Arbeitkammer des hydraulischen Verbrauchers zurückfließen. Da auf der Arbeitsleitung A ein Unterdruck herrscht, wird dieser Unterdruck über die Blende 215-A auf den Steuereingang 208-A des Rückschlagventils 210-A weitergeleitet und das Rückschlagventil 210-A ist offen. Die Blenden 215-A und 215-B sorgen dafür, dass einerseits der Druck aus den Zuleitungen 207-A und 207-B an den Steuereingang 208-A und 208-B weitergeleitet wird, und sorgen andererseits auch dafür, dass der Druckverlust über das 2/2-Wegesitzventil 220 nicht zu groß wird, wenn das Ventil 220 in der Stellung a ist. Zusammengefasst bedeutet eine Stellung b des 2/2-Wegesitzventils 220 eine Deaktivierung der Freilaufschaltung, so dass die Hilfslenkung aktiv über die 4/3-Wegeventile gesteuert wird, da die Rückschlagventile 210-A und 210-B jeweils gesperrt sind, wenn Druck auf der Leitung ist. Umgekehrt ist die hydraulische Freilaufschaltung 200-1 aktiviert, wenn das 2/2-Wegesitzventil 220 in Stellung a ist, so dass die Hilfslenkung passiv mitlenkt, da die Rückschlagventile 210-A bzw. 210-B sich öffnen, sobald Druck an einer entsprechenden Leitung anliegt.

Figur 3b zeigt zum besseren Verständnis ein vergrößertes Schema des Rückschlagventils 210-A bzw. 210-B, das im Folgenden mit dem Bezugszeichen 210 bezeichnet wird. In dem Rückschlagventil 210 ist in einem Gehäuse 217 ein Schließelement 204 angeordnet, das eine Verbindung zwischen einem ersten Fluidanschluss 207-1 bzw. 207-2 und einem Fluidanschluss 206 herstellen bzw. trennen kann. Über einen dritten Fluidanschluss 208 kann das Trennen bzw. das Verbinden des ersten und zweiten Fluidanschlusses gesteuert werden. Durch eine optionale Feder 203 kann zum Beispiel das Schließelement 204 in einer geschlossenen Stellung gehalten werden. Der erste Fluidanschluss 207-1 bzw. 207-2 ist mit einem ersten Druckraum 209 im Inneren des Ventilgehäuses 217 verbunden. Diese Art von Ventilen sind oft mit zwei getrennten Anschlüssen mit dem ersten Druckraum 209 verbunden, was durch die beiden Anschlüsse 207-1 und 207-2 angedeutet ist. Der zweite Fluidanschluss 206 ist mit einem zweiten Druckraum 212 im Inneren des Ventilgehäuses 217 verbunden. Der Steueranschluss 208 ist mit einem dritten Druckraum 211 im Inneren des Ventilgehäuses 217 verbunden. Im geschlossenen Zustand sind die drei Druckräume 209, 212 und 211 durch das Schließelement 204 voneinander getrennt. Sind der zweite Anschluss 206 und der Steueranschluss 208 drucklos und der erste Anschluss 207-1 bzw. 207-2 unter Druck, wird die Druckfläche 209-1 am Schließelement 204 mit Druck beaufschlagt, so dass sich das Schließelement 204 in der Darstellung von Figur 3b nach oben schiebt, da auf die gegenüberliegende Druckfläche 211-1 in der dritten Druckkammer 211 keine Druckkräfte anliegen und die Federkraft der Feder 203 in der Regel gegenüber der Druckkraft in der ersten Druckkammer 209 vernachlässigbar sind. Das heißt, das Ventil öffnet sich und der erste Anschluss 207-1 bzw. 207-2 und der zweite Fluidanschluss 206 sind miteinander verbunden. Wird beispielsweise der Druck in der ersten Druckkammer 209 über die Leitung 207-2 an den Steuereingang 208 weitergeleitet, wird die Druckfläche 211-1 mit dem selben Druck beaufschlagt, wie in der ersten Druckkammer 209. Da die Druckfläche 209-1 in der ersten Druckkammer kleiner ist als die Druckfläche 211-1 in der dritten Druckkammer 211, ergibt sich eine resultierende Kraft auf das Schließelement 204 in der in Figur 3b gezeigten Darstellung nach unten. Das heißt, das Rückschlagventil 210 ist geschlossen.

Figur 3c zeigt eine Schaltpatrone, die eine Realisierung des Rückschlagventils 210 der Figur 3b darstellt. In Figur 3c sind die Elemente, die dieselbe Funktion erfüllen wie in Figur 3b mit denselben Bezugszeichen versehen. Das Ventilgehäuse 217 der Figur 3b setzt sich in der Figur 3c aus dem Ventilsitz 205 und der Verschlussschraube 202 zusammen. Eine Feder 203 drückt das Schließelement 204 im Ruhezustand in einen gesperrten Zustand. Ein erster Fluidanschluss I dient zum Anschluss einer Fluidleitung an einen ersten Druckraum IR des Rückschlagventils 210. Ein zweiter Fluidanschluss O dient dem Anschluss einer Fluidleitung an einen zweiten Druckraum OR. Im geschlossenen Zustand sind der erste Druckraum IR und der zweite Druckkammer OR voneinander getrennt. Ein Steueranschluss 208 ist mit einem dritten Druckkammer 211 verbunden, wodurch eine Schließkraft auf das Schließelement 204 ausgeübt werden kann. Das Rückschlagventil 210 ist als Schaltpatrone auslegt, die in eine Bohrung einer hydraulischen Systemkomponente eingeschraubt werden kann. Dichtungen 201 ermöglichen einen druckdichten Einbau. Die Dichtungen 201 sind so ausgelegt, dass das Rückschlagventil 210 in der von Figur 3c gezeigten Ansicht nur von dem unteren Anschluss (erster Fluidanschluss I) her angeströmt werden soll. Der erste Anschluss I ist deshalb ein Eingangsanschluss und der zweite Anschluss O ist ein Ausgangsanschluss. Sind zum Beispiel der Ausgangsanschluss O und der Steueranschluss 208 drucklos und wird der Eingangsanschluss I mit Druck beaufschlagt, wird über die Druckfläche IF ein Kraft in der von Figur 3c gezeigten Darstellung nach oben auf das Schließelement 204 ausgeübt, so dass sich die Verbindung zwischen Eingang I und Ausgang O öffnet, wenn die Federkraft der Feder 203 kleiner ist als die Druckkraft auf die erste Druckfläche IF. Wird der selbe Druck, der am Eingang I herrscht, auf den Steueranschluss 208 gelegt, herrscht im dritten Druckraum 211 der gleiche Druck wie am Eingangsanschluss I. Da die Druckfläche 211-1 im dritten Druckraum 211 größer ist als die erste Druckfläche IF im ersten Druckraum IR, wird auf das Schließelement 204 eine Kraft nach unten ausgeübt, so dass sich das Rückschlagventil 210 schließt

Die mit den Figuren 3a, 3b und 3c gezeigte Ausführungsform verwendet ein Ventil, das im Normalfall offen ist und nur dann schließt, wenn der Steuereingang mit Druck beaufschlagt wird. Wird der Eingang des Ventils mit dem Steuereingang verbunden, erfüllt dieses Ventil die Funktion eines Rückschlagventils.

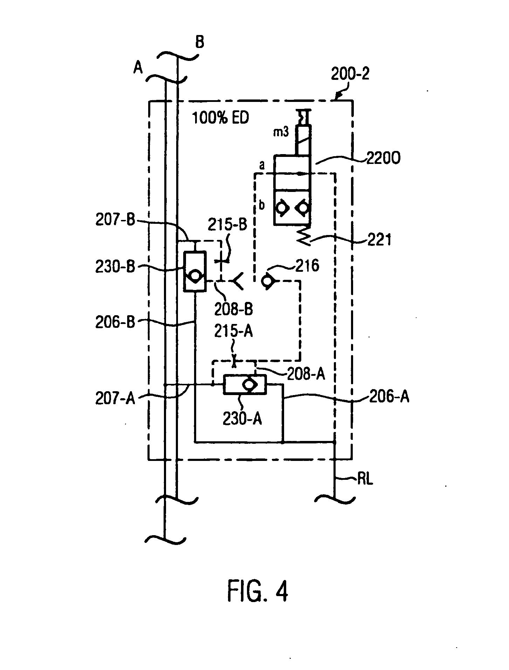

Im Gegensatz dazu zeigt Figur 4 eine zweite Ausführungsform, in der konventionelle Rückschlagventile 230-A und 230-B verwendet werden, die im Normalfall in einer Richtung sperren und in der anderen Flussrichtung öffnen. Die Sperrrichtung wird entsperrt, wenn der Steuereingang 208-A bzw. 208-B mit Druck beaufschlagt wird. Um die selbe Funktion zu erfüllen wie die Freilaufschaltung der Figur 3a, muss das 2/2-Wegesitzventil 220 im Ruhezustand (Stellung a) durchschalten und im bestromten Zustand (Stellung b) sperren. Die restlichen Elemente der Figur 4 sind identisch zu den Elementen in Figur 3a und wurden deshalb mit den selben Bezugszeichen gekennzeichnet.

Im Normalbetrieb ist das 2/2-Wegesitzventil 220 wie in der ersten Ausführungsform gemäß Figur 3a bestromt (100% ED). Im Unterschied zur ersten Ausführungsform steht jedoch das 2/2-Wegesitzventil 220 der Figur 4 im bestromten Zustand in Stellung a, wodurch der unter Druck stehende Steuereingang 208-A bzw. 208-B druckentlastet wird (Normalbetrieb mit aktiver Lenkung). Die Blende 215-A bzw. 215-B sorgt dafür, dass der Druck am Eingang des Rückschlagventils 230-A bzw. 230-B aufrechterhalten wird, selbst wenn der Steuereingang 208-A bzw. 208-B über das 2/2-Wegesitzventil 220 druckentlastet wird. Da der Druck am Steuereingang 208-A bzw. 208-B aufgrund der Blende 215-A bzw. 215-B nie ganz null werden kann, muss das Rückschlagventil 230-A bzw. 230-B so ausgelegt sein, dass es auch noch bei einem Druck gesperrt bleibt, der größer als null aber unterhalb des normalen Arbeitsdrucks ist. Beispielsweise kann das Rückschlagventil 230-A bzw. 230-B so ausgelegt sein, dass es bei einem Eingangsdruck am Steuereingang im Bereich von 0 % bis 50 % des Arbeitsdrucks sperrt. Wird der Strom durch die Spule des Magneten m3 abgeschaltet oder fällt er aus, schiebt die Feder 221 des 2/2-Wegesitzventils 220 das Ventil in die Stellung b. Das heißt, der Druck am Eingang 207-A bzw. 207-B des Rückschlagventils 230-A bzw. 230-B liegt direkt am Steuereingang 208-A bzw. 208-B des Rückschlagventils 230-A bzw. 230-B. In diesem Fall ist das Rückschlagventil 230-A bzw. 230-B offen und es kann hydraulische Flüssigkeit frei zwischen den Arbeitsleitungen A und B und damit zwischen den Arbeitskammern des hydraulischen Verbrauchers (in Figur 4 nicht gezeigt, siehe hierzu Figuren 1 und 2) hin- und herströmen. In diesem Fall lenkt die Hilfslenkung passiv mit.

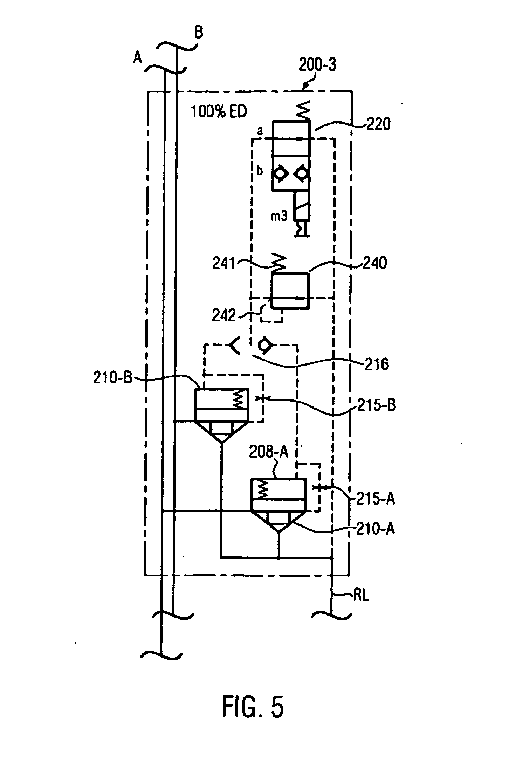

In einer dritten Ausführungsform gemäß Figur 5 wird der Freilaufschaltung der ersten Ausführungsform gemäß Figur 3a ein Druckbegrenzungsventil 240 parallel zum 2/2-Wegesitzventil 220 geschaltet. Dadurch wird der Freilaufschaltung 200-3 eine Schock- und Nachsaugfunktion hinzugefügt. Die restlichen Elemente der Figur 5 sind identisch zu den Elementen in Figur 3a. Diese Elemente und deren Funktion wird deshalb nicht mehr gesondert beschrieben. Das Druckbegrenzungsventil 240 ist im Normalfall gesperrt. Übersteigt ein Druck am Eingang des Druckbegrenzungsventils 240 einen vorbestimmten Wert, der durch die Federkraft der Feder 241 und durch interne Druckflächengeometrien im Druckbegrenzungsventil 240 festgelegt ist, wird ein internes Schließelement durch Druckkräfte, die über interne Steuerkanäle 242 auf interne Verstellelemente übertragen werden, in eine Öffnungsposition geschoben, und das 2/2-Wegesitzventil 220 wird fluidisch umgangen.

Entsteht im System ein Druckstoß, zum Beispiel durch einen Schlag auf die Antriebsräder, pflanzt sich der Druckstoß über die Rückschlagventile 210-A bzw. 210-B bis zum 2/2-Wegesitzventil 220 fort. Überschreitet dieser Druckstoß einen durch das Druckbegrenzungsventil 240 vorgegebenen Wert, der zum Beispiel entsprechend Systembelastungsgrenzen ausgelegt wurde, öffnet das Druckbegrenzungsventil 240 und der Überdruck kann über die Rücklaufleitung ins Reservoir abgegeben werden. Da dadurch hydraulische Flüssigkeit aus dem Kreislauf abfließt, entsteht in der komplementären Arbeitsleitung ein entsprechender Unterdruck, durch den über das Rückschlagventil, das zu dem unter Druck stehenden Überdruckventil komplementär ist, hydraulische Flüssigkeit aus der Rücklaufleitung nachgesaugt wird. Somit erfüllt das Druckbegrenzungsventil eine Sicherheitsfunktion, um Schäden bei Druckstößen vorzubeugen.

## Patentansprüche

1. Hydraulische Freilaufschaltung (200-1, 200-2, 200-3) für eine hydraulische Hilfslenkung, die folgendes umfasst:
ein erstes hydraulisch betätigbares Rückschlagventil (210-A) zwischen einer ersten Arbeitsleitung (A) und einer Rücklaufleitung (R);
ein zweites hydraulisch betätigbares Rückschlagventil (210-B) zwischen einer zweiten Arbeitsleitung (B) und der Rücklaufleitung (R);
mindestens ein 2/2- Wege-Sitzventil (220) zur hydraulischen Steuerung des ersten und zweiten hydraulisch betätigbaren Rückschlagventils (210-A, 210-B).

2. Hydraulische Freilaufschaltung (200-1, 200-2, 200-3) nach Anspruch 1, worin Steuereingänge (208-A, 208-B) des ersten und zweiten hydraulisch betätigbaren Rückschlagventils (210-A, 210-B) über das mindestens eine 2/2-Wege-Sitzventil (220) mit der Rücklaufleitung (R) verbunden sind.

3. Hydraulische Freilaufschaltung (200-1, 200-2, 200-3) nach Anspruch 2, worin die Steuereingänge (208-A, 208-B) des ersten und zweiten hydraulisch betätigbaren Rückschlagventils (210-A, 210-B) mit jeweils einen Eingang eines Wechselventils (216) verbunden sind und ein Ausgang des Wechselventils (216) mit dem 2/2-Wege-Sitzventil (220) verbunden ist.

4. Hydraulische Freilaufschaltung (200-1, 200-3) nach einem der Ansprüche 1 bis 3, worin das erste und zweite hydraulisch betätigbare Rückschlagventil (210-A, 210-B) so ausgebildet ist, dass es bei drucklosem Steuereingang in beide Richtungen offen ist, und dass es bei druckbeaufschlagtem Steuereingang in Richtung Rücklaufleitung (R) sperrt.

5. Hydraulische Freilaufschaltung (200-1, 200-2, 200-3) nach einem der Ansprüche 1 bis 4, worin die hydraulische Freilaufschaltung (200-1, 200-3) aktiv ist, wenn das mindestens eine 212-Wege-Sitzventil (220) im unbestromten Ruhezustand ist.

6. Hydraulische Freilaufschaltung (200-1, 200-2, 200-3) nach einem der Ansprüche 2 bis 4, worin der Steuereingang (208-A) des ersten hydraulisch betätigbaren Rückschlagventils (210-A) über eine Blende (215) mit dem Arbeitsdruck der ersten Arbeitsleitung (A) beaufschlagt ist, und
worin der Steuereingang (208-B) des zweiten hydraulisch betätigbaren Rückschlagventils (210-B) über eine Blende (215) mit dem Arbeitsdruck der zweiten Arbeitsleitung (B) beaufschlagt ist.

7. Hydraulische Freilaufschaltung (200-1, 200-2, 200-3) nach einem der Ansprüche 1 bis 6, worin das mindestens eine 2/2-Wege-Sitzventil (220) ein elektrisch betätigbares 2/2-Wege-Sitzventil mit zusätzlicher Handbetätigung ist.

8. Hydraulische Freilaufschaltung (200-1, 200-3) nach Anspruch 4 oder 6 und 7, worin das elektrisch betätigbare 2/2- Wege-Sitzventil (220) im Ruhezustand öffnet und im bestromten Zustand schließt.

9. Hydraulische Freilaufschaltung (200-3) nach einem der Ansprüche 1 bis 8, worin parallel zu dem elektrisch betätigbaren 2/2- Wege-Sitzventil (220) ein Druckbegrenzungsventil (240) angeschlossen ist, das das elektrisch betätigbare 2/2-Wege-Sitzventil (220) umgeht, wenn der Druck auf einem der Steuereingänge (208-A, 208-B) einen vorbestimmten Wert überschreitet.

## Claims

1. Hydraulic freewheel switching mechanism (200-1, 200-2, 200-3) for a hydraulic auxiliary steering mechanism that comprises the following:
a first hydraulically operable check valve (210-A) between a first working line (A) and a return flow line (R);
a second hydraulically operable check valve (210-B) between a second working line (B) and the return flow line (R) ;
at least one 2/2 way seat valve (220) for hydraulic piloting of the first and second hydraulically operable check valve (210-A, 210-B).

2. Hydraulic freewheel switching mechanism (200-1, 200-2, 200-3) according to claim 1, in which the control inlets (208-A, 208-B) of the first and second hydraulically operable check valve (210-A, 210-B) are connected with the return flow line (R) by the at least one 2/2 way seat valve (220).

3. Hydraulic freewheel switching mechanism (200-1, 200-2, 200-3) according to claim 2, in which the control inlets (208-A, 208-B) of the first and second hydraulically operable check valve (210-A, 210-B) are connected respectively with one inlet of a shuttle valve (216) and an outlet of the shuttle valve (216) is connected with the 2/2 way seat valve (220).

4. Hydraulic freewheel switching mechanism (200-1, 200-3) according to one of claims 1 to 3, in which the first and second hydraulically operable check valve (210-A, 210-B) is designed in such a way, that it is open in both direction when the control inlet is unpressurized, and when the control inlet is pressurized, it blocks in the direction of the return flow line (R).

5. Hydraulic freewheel switching mechanism (200-1, 200-2, 200-3) according to one of claims 1 to 4, in which the hydraulic freewheel switching mechanism (200-1, 200-3) is active when the at least one 2/2 way seat valve (220) is in a resting position without current supply.

6. Hydraulic freewheel switching mechanism (200-1, 200-2, 200-3) according to one of claims 2 to 4, in which the control inlet (208-A) of the first hydraulically operable check valve (210-A) is pressurized by an orifice (215) with the working pressure of the first working line (A), and
in which the control inlet (208-B) of the second hydraulically operable check valve (210-B) is pressurized by an orifice (215) with the working pressure of the second working line (B).

7. Hydraulic freewheel switching mechanism (200-1, 200-2, 200-3) according to one of claims 1 to 6, in which the at least one 2/2 way seat valve (220) is an electrically operable 2/2 way seat valve with additional manual operation.

8. Hydraulic freewheel switching mechanism (200-1, 200-3) according to claim 4 or 6 and 7, in which the electrically operable 2/2 way seat valve (220) opens in resting position and closes in a condition in which current is supplied.

9. Hydraulic freewheel switching mechanism (200-3) according to one of claims 1 to 8, in which a pressure limit valve (240) is attached in parallel to the electrically operable 2/2 way seat valve (220), which circumvents the electrically operable 2/2 way seat valve (220) when the pressure exceeds a predetermined level at one of the control inlets (208-A, 208-B).

## Revendications

1. Découplage hydraulique (200-1, 200-2, 200-3) pour une direction assistée hydraulique, comprenant :
une première soupape anti-retour (210-A) à commande hydraulique entre une première conduite de travail (A) et une conduite de retour (R) ;
une seconde soupape anti-retour (210-B) à commande hydraulique entre une seconde conduite de travail (B) et la conduite de retour (R) ;
au moins une soupape à siège à 2/2 voies (220) pour la commande hydraulique de la première et de la seconde soupapes anti-retour (210-A, 210-B) à commande hydraulique.

2. Découplage hydraulique (200-1, 200-2, 200-3) suivant la revendication 1, dans lequel des entrées de commande (208-A, 208-B) de la première et de la seconde soupapes anti-retour (210-A, 210-B) à commande hydraulique sont reliées à la conduite de retour (R) par l'intermédiaire de la au moins une soupape à siège à 2/2 voies (220).

3. Découplage hydraulique (200-1, 200-2, 200-3) suivant la revendication 2, dans lequel les entrées de commande (208-A, 208-B) de la première et de la seconde soupapes anti-retour (210-A, 210-B) à commande hydraulique sont reliées chacune à une entrée d'une soupape à navette (216) et une sortie de la soupape à navette (216) est reliée à la soupape à siège à 2/2 voies (220).

4. Découplage hydraulique (200-1, 200-3) suivant l'une des revendications 1 à 3, dans lequel la première et la seconde soupapes anti-retour (210-A, 210-B) à commande hydraulique sont réalisées de sorte qu'elles ouvrent dans les deux directions dans l'état sans pression de l'entrée de commande et qu'elles ferment en direction de la conduite de retour (R) dans l'état de sollicitation en pression de l'entrée de commande.

5. Découplage hydraulique (200-1, 200-2, 200-3) suivant l'une des revendications 1 à 4, dans lequel le découplage hydraulique (200-1, 200-3) est actif lorsque la au moins une soupape à siège à 2/2 voies (220) est dans l'état de repos sans alimentation en courant.

6. Découplage hydraulique (200-1, 200-2, 200-3) suivant l'une des revendications 2 à 4, dans lequel l'entrée de commande (208-A) de la première soupape anti-retour (210-A) à commande hydraulique est sollicitée, par l'intermédiaire d'un obturateur (215), par la pression de service de la première conduite de travail (A), et
dans lequel l'entrée de commande (208-B) de la seconde soupape anti-retour (210-B) à commande hydraulique est sollicitée, par l'intermédiaire d'un obturateur (215), par la pression de service de la seconde conduite de travail (B).

7. Découplage hydraulique (200-1, 200-2, 200-3) suivant l'une des revendications 1 à 6, dans lequel la au moins une soupape à siège à 2/2 voies (220) est une soupape à siège à 2/2 voies à commande électrique avec commande manuelle supplémentaire.

8. Découplage hydraulique (200-1, 200-3) suivant les revendications 4 ou 6 et 7, dans lequel la soupape à siège à 2/2 voies (220), à commande électrique, ouvre dans l'état de repos et ferme dans l'état d'alimentation en courant.

9. Découplage hydraulique (200-3) suivant l'une des revendications 1 à 8, dans lequel une soupape de limitation de pression (240) est raccordée en parallèle à la soupape à siège à 2/2 voies (220), à commande électrique, laquelle soupape de limitation de pression contourne la soupape à siège à 2/2 voies (220) à commande électrique, lorsque la pression sur l'une des entrées de commande (208-A, 208B) dépasse par le haut une valeur prédéfinie.
